**Europäisches Patentamt**

(19) **European Patent Office**

**Office européen des brevets**

(11) Veröffentlichungsnummer: **0 003 744**
**B1**

(12) ## EUROPÄISCHE PATENTSCHRIFT

(45) Veröffentlichungstag der Patentschrift:
**10.07.85**

(51) Int. Cl.⁴: **H 04 Q 3/54**, G 06 F 13/00

(21) Anmeldenummer: **79100098.7**

(22) Anmeldetag: **15.01.79**

(54) **Aus Speichern unterschiedlichen Typs zusammengesetzter Zentralspeicher.**

(30) Priorität: **24.02.78 DE 2807911**

(43) Veröffentlichungstag der Anmeldung:
**05.09.79 Patentblatt 79/18**

(45) Bekanntmachung des Hinweises auf die Patenterteilung:
**10.07.85 Patentblatt 85/28**

(84) Benannte Vertragsstaaten:
**BE FR IT**

(56) Entgegenhaltungen:
**DE - A - 1 512 036**
**DE - B - 1 562 233**
**FR - A - 2 346 775**

**MICROELECTRONICS AND RELIABILITY, Vol. 15, Nr. 4, 1976, Oxford, NAPOLEONE CAVLAN: "structure and applications of filed programmable logic arrays", Seiten 285-295**
**ELECTRONICS, Vol. 46, Nr. 9, 26. April 1973, New York, USA, J.F. TOWNSEND: "Overlaid memory simplifies programs, has hidden nooks for diagnostics", Seiten 116-119**

(73) Patentinhaber: **Telefonbau und Normalzeit GmbH, Mainzer Landstrasse 128-146 Postfach 4432, D-6000 Frankfurt (Main) (DE)**

(72) Erfinder: **Delcher, Klaus, Birkholzweg 10a, D-6000 Frankfurt 50 (DE)**
Erfinder: **Resch, Wolfgang, Kalsbaderstrasse 29, D-6090 Rüsselsheim (DE)**

## Beschreibung

In Vermittlungsanlagen mit indirekt arbeitender zentraler Steuerung wird in der Regel ein Speicher benötigt, in dem die Zustände der einzelnen über ein Koppelfeld miteinander zu verbindenden Anschlußeinrichtungen abgelegt sind. Dabei ist es erwünscht, zu den einzelnen Zuständen bzw. Parametern der Anschlußeinrichtungen getrennt zugreifen zu können, weil in Abhängigkeit von den gerade ablaufenden Steuerprogrammen jeweils nur bestimmte Zustände von Teilnehmereinrichtungen interessant sind. Es ist daher vorgeschlagen worden, die einzelnen Zustände oder Gruppen dieser Zustände einer Anschlußeinrichtung in jeweils einem getrennt ansprechbaren Teilbereich des Speicherbereichs der Anschlußeinrichtung zu deponieren, so daß beim Aufsuchen von Anschlußeinrichtungen mit bestimmten Zuständen (z. B. freier Verbindungssatz, Anschlußeinrichtung mit bestimmter externer Rufnummer oder ähnliches) nur die betreffenden Teilbereiche dieser Anschlußeinrichtungen abgesucht werden müssen, die die gewünschte Information enthalten.

Unter den abzuspeichernden Zuständen der einzelnen Anschlußeinrichtungen gibt es nun solche die sich relativ schnell ändern können, aber auch solche die sich voraussichtlich während der gesamten Betriebszeit der Anlage überhaupt nicht ändern. Ferner sind Zustände möglich, die nur von dem Wartungspersonal einstellbar sein sollen, wobei der eingestellte Zustand von dem Wartungspersonal auch leicht erkannt werden muß.

Bedingt ist es aber auch möglich, daß Informationen in einer großen Anzahl an Anlagen in gleichartiger Form und unveränderlich gespeichert werden sollen. Es zeigt sich also, daß in dem zentralen Speicher einer Vermittlungsanlage Informationen unterschiedlichster Art gespeichert werden können. Auf der anderen Seite sind eine große Anzahl verschiedener Speichertypen bekanntgeworden, deren Eigenschaften mit denen der abzuspeichernden Informationen korrespondieren.

Aus der französischen Patentanmeldung FR-A-2 346 775 ist ein Prozessor bekannt, welcher Daten unterschiedlicher Art, insbesondere unterschiedlicher Priorität verarbeitet, wobei die Art der Verarbeitung von der Priorität der Signale abhängt. Die Daten unterschiedlicher Priorität sind in verschiedenen Speichern gespeichert, die über ein gemeinsames Adressenvielfach angesteuert und zusammen ausgelesen werden.

Aus Mikroelectronics and Reliability, Pergamon Press, 1976, Vol. 15, S. 285—295, ist eine Schaltungsanordnung bekannt, (siehe insbesondere Seite 291) bei der es möglich ist, defekte Speicherzellen durch Speicherzellen eines anderen Speichers zu ersetzen. Dabei richtet sich die Adressierung der Ersatzspeicherstellen nach der Adressierung der defekten Zellen des teilweise gestörten Speichers. Dabei wird der gesamte, mit einer Adresse ansprechbare Speicherbereich durch einen entsprechenden Bereich des Ersatzspeichers ersetzt. Es wird nicht zum Teil aus dem defekten Kernspeicher sondern ausschließlich aus dem auf Ersatz geschalteten Speicher (RAM) ausgelesen. Die Adressierung der als Ersatz geschalteten Speicherzellen muß demnach in Abhängigkeit davon vorgenommen werden, welche Speicherzellen im Hauptspeicher defekt sind. Unterschiedliche Speichertypen zur Speicherung unterschiedlicher Daten sind nicht vorgesehen. Es können auch nicht durch gesonderte Adressen aus unterschiedlichen Speichern zusammengesetzte Unterbereiche angesprochen werden.

Aus der DE-OS 1 512 036 ist es aus einer zeitmultiplex gesteuerten Vermittlungseinrichtung bekannt, den als Hauptbestandteil der zentralen Steuerung und Speicherung zu betrachtenden Speicherblock sowohl mit dynamischen oder aber mit magnetischen Speichermitteln auszuführen. Der Speicherblock ist in einzelne Spaltengruppen aufgeteilt, die aber nicht einzeln adressiert werden, sondern der Speicher wird zeilenweise nacheinander ausgelesen, wobei jede sich über alle Spaltengruppen erstreckende Zeile einer Zeitmultiplex-Verbindung zugeordnet ist.

Die vorliegende Erfindung geht daher aus von einer Schaltungsanordnung mit einem Zustandsspeicher zur zentralen Speicherung der Zustände von Anschlußeinrichtungen in Fernmeldeanlagen, wobei der Zustandsspeicher, der von einem Hauptdecoder (H-Dec) angesteuert wird, in einzelne nebeneinander angeordnete Teilspeicher (R1, R2, R3) gleichen Speichertyps (RAM) aufgeteilt ist.

Aufgabe der Erfindung ist es, bei einer Schaltungsanordnung dieser Art mit Hilfe einer sehr einfach aufgebauten Decodiereinrichtung aus einzelnen Teilnehmern fest zugeordneten Teilbereichen bestimmte Unterbereiche nicht anzusprechen und statt dessen einen Unterbereich eines anderen Speichertyps auszuspeichern. Das bedeutet insbesondere, daß bei gleichbleibender Adressierung es möglich sein soll, einen im wesentlichen aus einem RAM bestehenden Teilbereich in einem seiner Unterbereiche durch einen PROM zu ersetzen.

Die Aufgabe wird erfindungsgemäß durch die in dem Hauptanspruch angegebene Merkmalskombination gelöst. Die Erfindung besteht daher im Prinzip darin, bei einer Schaltungsanordnung der o. a. Gattung vorgegebene Unterbereiche einzelner sich in dem Speicher zyklisch wiederholender Teilbereiche durch einen Teilbereich eines Speichers anderen Typs zu ersetzen. Der Ersatz geschieht in einfacher Weise durch einen dem Hauptdecoder nachgeschalteten Wortdecoder, der den den zu unterdrückenden Unterbereich ansprechenden Adressenteil in Richtung zu diesem Speicher hin unterdrückt und die unterdrückte Adresse stattdessen auf einen anderen Speicher abweichenden Typs anwendet, wodurch dessen so angesprochener Teilbereich statt des unterdrückten Unterbereichs ausgelesen wird.

Ein Ausführungsbeispiel der Erfindung wird nachfolgend anhand der Zeichnung erläutert, darin zeigt

Fig. 1 eine aus mehreren einzelnen Modulen gebildete Schaltungsanordnung,

Fig. 2 mehr ins einzelne gehend ein Modul nach Fig. 1.

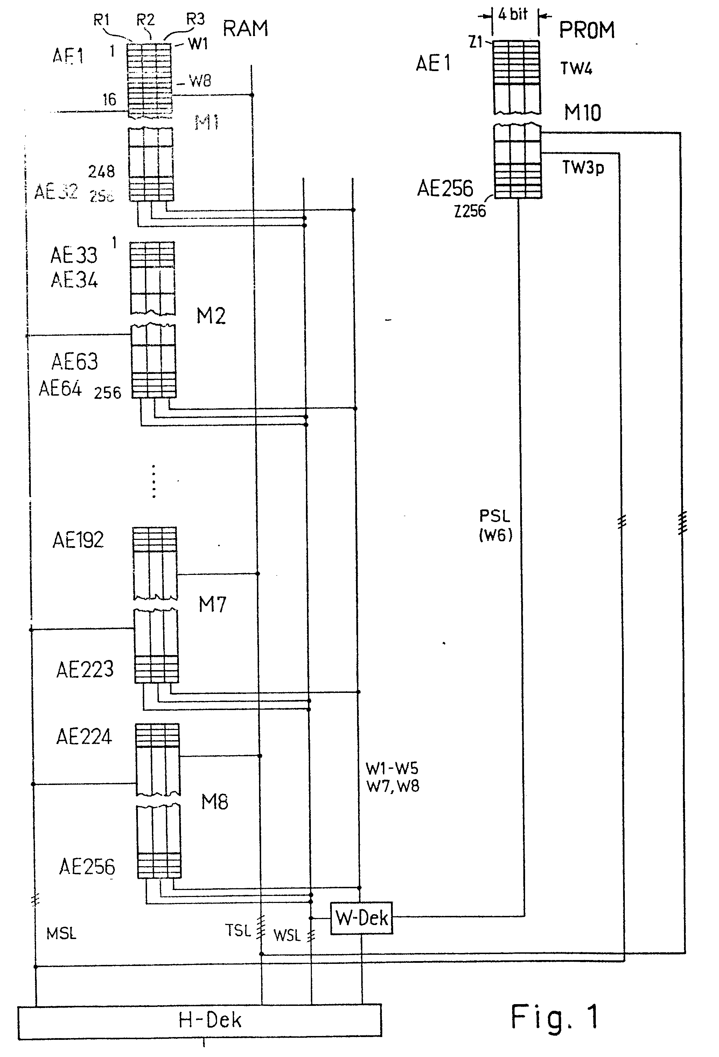

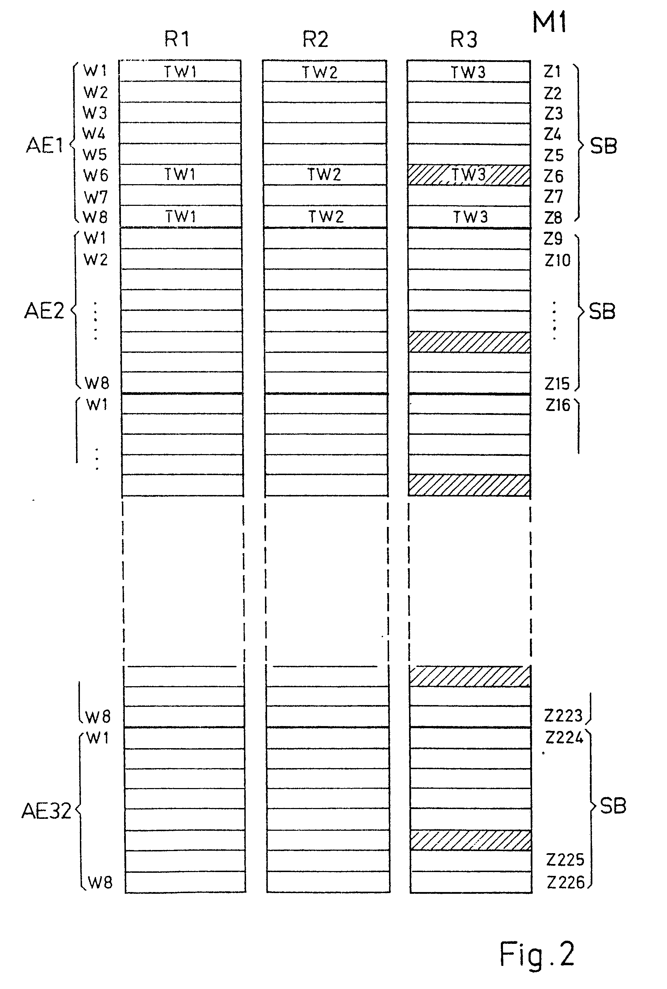

Der in Fig. 1 dargestellte zentrale Zustandsspeicher besteht aus 8 einzelnen Modulen M1 bis M8 die einzeln aus RAM-Speichern gebildet sind, sowie einem zusätzlichen Modul M10, welcher ein PROM ist. Jedes einzelne der Moduln M1 bis M8, die in Fig. 1 nur zum Teil und jeweils in abgebrochener Darstellung gezeigt sind, setzt sich aus drei einzelnen, zueinander parallel geschalteten RAM-Teilspeichern R1, R2, R3 zusammen, die jeweils vier bit breit und 256 Zeilen lang sind. Die nebeneinander gesetzten Teilspeicher R1 bis R3 haben also zusammen eine Breite von 12 bit. Diese Breite entspricht der Breite eines dort jeweils abzuspeichernden Wortes W, welches immer bis zu 12 bit breit sein kann. Jeder Anschlußeinrichtung AE1 bis AE256 sind jeweils acht Worte W1 bis W8 zugeordnet, die in den einzelnen Moduln untereinander liegen und sich jeweils in Form eines nachfolgend als Gesamtzeile bezeichneten Teilbereichs über drei Teilzeilen erstrecken die immer zu den drei Teilspeichern R1, R2, R3 gehören. Dies ist mehr ins einzelne gehend in Fig. 2 dargestellt, wo ein in abgebrochener Darstellung gezeigtes Modul M1 zu erkennen ist. Entsprechend den einzelnen nachfolgend vielfach als Teilzeilen bezeichneten Unterbereichen in den RAM's R1 bis R3 einer Gesamtzeile gibt es drei Teilworte TW1 bis TW3, die zusammen das Gesamtwort eines Teilbereichs ergeben.

Der für ein Wort benötigte Speicherbereich wurde weiter oben vielfach als Teilbereich innerhalb eines Speicherbereichs bezeichnet, welcher den einzelnen Anschlußeinrichtungen fest zugeordnet ist. Jede Anschlußeinrichtung besitzt also einen aus acht Worten W1 bis W8 zusammengesetzten Speicherbereich. In einem Modul können somit insgesamt 32 Speicherbereiche untergebracht werden. Sollen mehr als 32 Anschlußeinrichtungen ein Speicherplatz in dem zentralen Zustandsspeicher zur Verfügung gestellt werden, so müssen entsprechend viele Moduln M angefügt werden. Wie sich leicht errechnen läßt, werden für 256 Anschlußeinrichtungen mit jeweils 32 Speicherbereichen insgesamt 8 Moduln benötigt. Wobei, wie weiter oben schon erläutert, jedes Modul (siehe auch Fig. 2) insgesamt 256 Gesamtzeilen Z1 bis Z256 besitzt. Die Grenzen der einzelnen Speicherbereiche sind in Fig. 1 und 2 durch verstärkte Trennlinien an den betreffenden Zeilen hervorgehoben.

Im vorliegenden Ausführungsbeispiel soll nun angenommen werden, daß das dritte Teilwort TW3 des sechsten Wortes W6 jedes Speicherbereichs SB (siehe Fig. 2) in einem PROM eingeschrieben sein soll, während das gesamte Modul M durch einen RAM gebildet ist. Eine derartige Aufgabenstellung kann z. B. dann erwünscht sein, wenn als TW3 eine Information gespeichert werden soll, die sich bei einer kundenspezifischen Anlage nicht mehr ändert. TW3 kann z. B. eine Kennung betreffen, die sich auf den grundsätzlichen Aufbau der zugehörigen Anschlußeinrichtung bezieht. So könnte sich aus TW3 in Wort W6 entnehmen lassen, ob es sich bei der Anschlußeinrichtung um eine Amtsübertragung, eine Teilnehmerschaltung, oder einen Innenverbindungssatz handelt. In TW1 könnte z. B. aufgezeigt sein, ob die betroffene Anschlußeinheit frei oder besetzt ist.

In TW2 könnte dann eine ergänzende Information über die zugehörige Anschlußeinrichtung eingeschrieben sein, z. B. ob es sich bei der Teilnehmerschaltung um einen Teilnehmer mit Tastwahl oder mit Nummernwahl, ob es sich bei dem Verbindungssatz um einen Direktrufsatz, einen normalen Innenverbindungssatz oder um einen Hilfssatz handelt, oder ob die Amtsübertragung zur Auswertung von Impulskennzeichen oder von Schleifenkennzeichen geeignet ist. Darüber hinaus kann sich aus dem Inhalt von TW2 in W6 noch erkennen lassen, ob die betreffende Anschlußeinrichtung überhaupt gesteckt ist oder nicht. In diesem Fall müßte die Information von TW2 bei jeder Inhaltsänderung des betreffenden Speicherbereiches erneut zu dem zentralen Zustandsspeicher übetragen werden, damit TW2 auf dem aktuellen Stand bleibt. Es ist verständlich, daß man eine sich möglicherweise recht schnell ändernde derartige Information nicht in einen PROM einspeichern kann, sondern daß TW2 in einen RAM gespeichert werden muß. Entsprechendes könnte für TW1 in dem Wort W6 gelten, wenn hierin z. B. der augenblickliche Zustand (frei übersetzt) abgelegt wird.

In Fig. 2 ist TW3 von W6 noch schraffiert hervorgehoben, da dieses Teilwort in einem PROM gespeichert sein soll. Der Sinn dieser Maßnahme, warum nun zwei Teilwörter in dem einen Speichertyp und das dritte Teilwort in ein einem anderen Speichertyp gespeichert werden liegt darin, daß die gewählten Speichertypen zum einen für die abzuspeichernden Informationen sehr geeignet sind, zum anderen aber TW1 bis TW3 ein einziges Gesamtwort bilden sollen, welches sich dadurch auszeichnet, daß es beim adressieren des Wortes W6 ohne besondere Operationen zur Verfügung steht, ebenso wie dies bei der Adressierung der Worte W1 bis W5 sowie W7 und W8 der Fall ist. Es sollen also bei der Ausspeicherung des Wortes W6 nicht gesonderte Maßnahmen getroffen werden, obwohl bei diesem Wort Teile in einem RAM und der Rest in einem PROM liegen.

Daß dies möglich ist zeigt Fig. 1. Soll ein bestimmtes Wort ausgespeichert werden, so wird über eine Modulsteuerleitung MSL erst einmal das betreffende Modul M angesteuert, wobei MSL drei bit breit ist und somit eine Auswahl unter 8 Moduln treffen kann. Gleichzeitig wird noch über eine Teilnehmersteuerleitung TSL, welche ebenfalls wie die MSL von einem Hauptdekoder H-Dek ausgeht, der dem Teilnehmer des angesprochenen Moduls zugeordnete Speicherbereich aktiviert. Da jedes Modul, wie weiter oben schon erläutert, 32 Speicherbereiche SB besitzt, genügt hierzu eine 5 bit breite Leitung. Um nun noch innerhalb des einzelnen (von 256) Speicherbereiche angesteuerten Speicherbereichs ein bestimmtes Wort auswählen zu können, wird eine Wortsteuerleitung WSL in geeigneter Weise angesteuert. Da jeder Speicherbereich SB 8 Worte besitzt, ist hierfür eine 3 bit breite Steuerleitung hinreichend.

Es läßt sich somit jedes einzelne in den RAM-Moduln M1 bis M8 befindliche Wort ansteuern.

Für den Fall der Ansteuerung des Wortes W6 in jedem der einzelnen Speicherbereiche sollen nun erzwungen werden, daß statt des dort befindlichen Teilwortes TW3 im RAM ersatzweise ein Teilwort TW3p angesteuert wird, ohne daß hierzu ein besonderer Programmieraufwand notwendig ist. Dies geschieht durch einen Wortdekoder W-Dek, über den nur dann eine den Teilspeicher R3 ansteuernde Information von der Wortsteuerleitung WSL durchgelassen wird, wenn die Worte W1 bis W5, W7 und W8 angesteuert werden sollen.

Soll aber durch die Wortsteuerleitung WSL das Wort W6 angesteuert werden, so ist dies hinsichtlich der Teilspeicher R1, R2 für jedes Modul auch weiterhin möglich, nicht aber für den Teilspeicher R3, bei dem ein entsprechender Anreiz durch den Dekoder W-Dek unterdrückt wird.

Bei der Ansteuerung des Wortes W6 in den einzelnen Speicherbereichen ist es also so, daß die Ausgabe des Teilwortes TW3 unterdrückt wird, welches sich in dem Teilspeicher R3 befindet. Stattdessen wird aber von dem Dekoder W-Dek ein Signal auf die PROM-Steuerleitung PSL gegeben, wodurch das PROM M10 angesteuert wird. Dieses PROM ist genauso breit und lang wie ein Teilspeicher R3 (also 4 bit und auch ebenso lang, also 256 Zeilen). Es kann also jedem Teilwort TW3 aller Worte W6 sämtlicher 256 Speicherbereiche jeweils eine Zeile in dem Modul M10 zugeordnet werden. Diese Zuordnung geschieht mittels der insgesamt 8 bit auf den Leitungen MSL und TSL, die zusammen jeweils eine von 256 Zeilen des Moduls M10 ansteuern können. Dabei definiert die Information auf der Leitung MSL jeweils 1 von 8 Feldern in M10, die jeweils einem der Moduln M1 bis M8 zugeordnet sind. Diese einzelnen Felder F sind in dem gebrochen dargestellten Modul M10 durch stark hervorgehobene Zeilentrennlinien herausgestellt. Jedes einzelne Feld besitzt 32 Zeilen, so daß jede dieser Zeilen jeweils einem Speicherbereich in dem zugehörigen Modul zugeordnet werden kann.

Durch dieses Ansteuerverfahren gibt also jeweils die betreffende Zeile in dem PROM ihre Information statt der ausgeblendeten Teilzeile TW3 in dem RAM ab, falls das Wort W6 angesteuert wird.

Selbstverständlich sind auch andere Kombinationen möglich, etwa indem im RAM bei anderen Worten als dem Wort W6 mehr als eine Teilzeile, z. B. die Teilzeilen TW1 und TW2 ausgeblendet werden und stattdessen ersatzweise zwei PROM-Zeilen abgefragt werden. Die ersatzweise abgefragten Teilzeilen können aber auch unterschiedlichen Speichertypen angehören, so daß sich die Speicherzeilen aller drei Teilworte innerhalb eines Wortes voneinander unterscheiden. Auch andere, sehr viel kompliziertere Kombinationen sind im Rahmen der Erfindung denkbar. Wesentlich dabei ist immer, daß die einzelnen Informationen eines Wortes derart zusammengestellt werden, daß sie in ihrer Verbindung einen hohen Informationswert ergeben, der nicht zusätzliche Suchläufe notwendig macht. So ist es z. B. angebracht, sowohl die Rufnummer eines Teilnehmers, als auch seinen Zustand innerhalb eines Wortes unterzubringen, da hierdurch beim Suchen eines freien Teilnehmers durch einen rufenden Teilnehmer sofort unter der Rufnummer des gerufenen Teilnehmers sein Freizustand erkannt werden kann. Auch hier wird man die sich nicht ändernde Rufnummer des gerufenen Teilnehmers in einem PROM oder ROM, seinen Freizustand aber in einem RAM ablegen.

## Patentanspruch

Schaltungsanordnung mit einem Zustandsspeicher zur zentralen Speicherung der Zustände von Anschlußeinrichtungen in Fernmeldeanlagen, wobei der Zustandsspeicher der von einem Hauptdekoder (H-Dek) angesteuert wird, in einzelnen nebeneinander angeordneten Teilspeicher (R1, R2, R3) gleichen Speichertyps (RAM) aufgeteilt ist, dadurch gekennzeichnet, daß die Teilspeicher (R1, R2, R3) einzeln adressierbar sind, daß jeder Anschlußeinrichtung ein fester Speicherbereich (SB) des Zustandsspeichers zugeordnet ist, welcher sich aus einzeln ansprechbaren Teilbereiche (W1 bis W8) zusammensetzt, daß Unterbereiche (TW1, TW2, TW3) jedes Teilbereichs den Teilspeichern (R1, R2, R3) zugeordnet sind, daß in den einzelnen Teilbereichen (W1 bis W8) bestimmte Unterbereiche (TW3 in W6) vorhanden sind, deren Adressierung durch einen dem Hauptdekoder nachgeschalteten Wortdekoder (W-Dek) abgeschaltet wird und stattdessen unter Einfluß des Wortdekoders ein Unterbereich in einem weiteren Speicher (PROM) eines von dem in dem Zustandsspeicher verwendeten Speichertyps abweichenden Typs adressiert wird, wobei die vorgenannten bestimmten Unterbereiche innerhalb des Zustandsspeichers gleiche Abstände voneinander haben.

## Claim

Circuit arrangement with a status-store for centrally storing the status of terminal units in telecommunications plants, whereby the status-store is controlled by a main-coder (H-Dek) and is divided into partial stores which are arranged side by side as single stores of the same type (RAM), comprising that the partial stores (R1, R2, R3) are able to be addressed singly, that a fixed storing area (SB) of the status-store is associated to each terminal unit, which consists of singly addressable partial areas (W1 to W8), that sub-areas (TW1, TW2, TW3) of each partial area are associated to the partial stores (R1, R2, R3) that within the single partial areas (W1 to W8) there are defined sub-areas (TW3 in W6) the addressing of which is switched off by a word-decoder (W-Dek) arranged after he main decoder, and instead of this a sub-area within another store (PROM) of different type is addressed under the influence of a word-decoder, whereby said defined sub-areas within the status-store have the same distance from each other.

**Revendication**

Montage comprenant une mémoire d'état pour la mémorisation centrale des états de dispositifs de raccordement dans des installations de télécommunication, la mémoire d'état, à sélection par un décodeur principal (H-Dek), étant partagée en différentes mémoires partielles (R1, R2, R3) juxtaposées de même type (RAM), caractérisé en ce que les mémoires partielles (R1, R2, R3) sont adressables individuellement, qu'à chaque dispositif de raccordement est associée une zone de mémoire (SB) fixe de la mémoire d'état, qui se compose de zones partielles (W1 à W8) pouvant être consultées individuellement, que des sous-zones (TW1, TW2, TW3) de chaque zone partielle sont associées aux mémoires partielles (R1, R2, R3), que les différentes zones partielles (W1 à W8) contiennent des sous-zones (TW3 en W6) déterminées dont l'adressage est coupé par un décodeur de mots (W-Dek), monté à la suite du décodeur principal, et est remplacé par l'adressage, sous l'influence du décodeur de mots, d'une sous-zone dans une autre mémoire (PROM), d'un autre type que celui utilisé dans la mémoire d'état, lesdites sous-zones déterminées ayant les mêmes distances entre elles à l'intérieur de la mémoire d'état.

0 003 744

Fig. 1

M1

Fig.2